# EUROPÄISCHE PATENTSCHRIFT

(11) **EP 3 401 659 B1**
(45) Veröffentlichungstag und Bekanntmachung des Hinweises auf die Patenterteilung: **01.01.2020**
(21) Anmeldenummer: 18170362.0
(22) Anmeldetag: 02.05.2018
(51) Int. Cl.: G01M 3/28, F17D 5/02, G08B 21/18

(54) **VERFAHREN ZUM DETEKTIEREN EINER LECKAGE IN EINER FLÜSSIGKEITSLEITUNG SOWIE WASSERZÄHLER MIT EINER STEUERUNG ZUR DURCHFÜHRUNG DES VERFAHRENS**
METHOD FOR DETECTING A LEAKAGE IN A LIQUID CHANNEL AND WATER METER WITH A CONTROLLER FOR CARRYING OUT SAID METHOD
PROCÉDÉ DE DÉTECTION D'UNE FUITE DANS UN CANAL LIQUIDE ET COMPTEUR D'EAU AVEC UN CONTRÔLEUR POUR LA MISE EN OEUVRE DE CE PROCÉDÉ

(30) Priorität: 10.05.2017 DE 102017110112
(43) Veröffentlichungstag der Anmeldung: 14.11.2018
(73) Patentinhaber: Grohe AG, 58675 Hemer (DE)
(72) Erfinder: Mielke, Achim, 32457 Porta Westfalica (DE); Theßeling, Matthias, 44801 Bochum (DE); Schönbeck, Heiko, 58675 Hemer (DE)

(56) Entgegenhaltungen:
- EP-A1- 2 940 447
- WO-A1-2007/087819
- WO-A1-2008/142470
- WO-A1-2016/079353
- US-A1- 2006 059 977

## Beschreibung

Die vorliegende Erfindung betrifft ein Verfahren zum Detektieren einer Tropfleckage in einer Flüssigkeitsleitung gemäß dem Oberbegriff des Anspruchs 1 sowie einen Wasserzähler mit einer Steuerung zum Durchführen des Verfahrens. Die Erfindung dient insbesondere der Verhinderung von Wasserschäden durch austretende Flüssigkeiten.

In Gebäuden ist regelmäßig eine Vielzahl von Wasserleitungen verlegt, die von einer Flüssigkeitsquelle, wie zum Beispiel einem öffentlichen Wasserversorgungsnetz, zu unterschiedlichen Verbrauchern, wie zum Beispiel Sanitärarmaturen, Spülmaschinen oder Waschmaschinen, führen. An diesen Flüssigkeitsleitungen können Leckagen beispielsweise in Form von Rohrbrüchen oder Rissen entstehen, durch die Flüssigkeit austreten kann. Die austretende Flüssigkeit kann an den Austrittsstellen zu großen Schäden an dem Gebäude, einem Mauerwerk und/oder an Einrichtungen des Gebäudes führen.

Aus diesem Grund ist bereits eine Vielzahl von Verfahren zum Detektieren von Leckagen an Flüssigkeitsleitungen bekannt. Beispielsweise sind mittels Durchflusssensoren Leckagen mit großen Flüssigkeitsaustritten, wie diese zum Beispiel bei Rohrbrüchen auftreten, detektierbar. Die dabei verwendeten Durchflusssensoren benötigen einen sehr großen Messbereich von bis zu 100 l/min (Liter pro Minute). Dies hat zur Folge, dass die Durchflusssensoren zur Bestimmung von geringen Flüssigkeitsaustritten, insbesondere von unter 0,7 l/min, wie diese zum Beispiel bei Tropfleckagen auftreten, nicht geeignet sind. Solche Tropfleckagen können daher lange unentdeckt bleiben, sodass die austretende Flüssigkeit beträchtliche Schäden beispielsweise durch Schimmelbildung verursachen kann.

Zur Detektierung von Tropfleckagen sind daher Verfahren bekannt, bei denen ein durch Tropfleckagen verursachter Druckabfall in den Flüssigkeitsleitungen über einen längeren Zeitraum gemessen wird. Bei diesen Messverfahren müssen die Flüssigkeitsleitungen beispielsweise mit einem Ventil über einen längeren Zeitraum (z. B. 15 Minuten) geschlossen werden, damit während dieser Zeit der Verlauf eines Drucks in den Flüssigkeitsleitungen gemessen werden kann. Wird während der Messung des Druckabfalls ein Verbraucher der Flüssigkeit in dem Gebäude aktiviert, müssen die Flüssigkeitsleitungen unverzüglich wieder geöffnet werden, damit eine Flüssigkeitsversorgung der Verbraucher verzögerungsfrei möglich ist. Dies führt somit zu einem Abbruch des Messverfahrens, sodass dieses zu einem späteren Zeitpunkt wiederholt werden muss. Weiterhin hat dies zur Folge, dass mit diesen Verfahren Leckagen mit Flüssigkeitsaustritten in einem bestimmten Bereich, insbesondere 0,3 l/h bis 0,7 l/min, nicht detektierbar sind, weil Tropfleckagen mit Flüssigkeitsaustritten in diesem Bereich nicht von (geringen) Flüssigkeitsentnahmen durch Verbraucher unterschieden werden können. Das bedeutet, dass eine Leckage mit Flüssigkeitsaustritten in dem Bereich stets zu einem Abbruch des Messverfahrens führt. Somit sind die bekannten Verfahren nur zur Detektion von Tropfleckagen mit Flüssigkeitsaustritten im Bereich von bis zu 0,3 l/h geeignet.

Die Druckschrift WO2007/087819A1 beschreibt ein Verfahren gemäß dem Oberbegriff des Anspruchs 1.

Weiterhin ist aus der WO 2016/079353 A1 ein Verfahren zum Detektieren von Tropfleckagen bekannt, bei dem eine Flüssigkeitsleitung mit einem Ventil geschlossen und anschließend wiederholt der Druck in der geschlossenen Flüssigkeitsleitung gemessen wird. Der gemessene Druck wird jeweils mit dem (unmittelbar) vorhergehend gemessenen Druck verglichen. Dabei wird die Häufigkeit bestimmt, wie oft der zuletzt gemessene Druck mit dem vorhergehend gemessenen Druck übereinstimmt. Es wird von einer Tropfleckage ausgegangen, wenn die Häufigkeit übereinstimmender Druckwerte innerhalb einer vorgegebenen Zeitspanne einen Schwellenwert übersteigt.

Die US 2006 005 99 77 A1 offenbart ein Sensorsystem mit einer Steuerung, die zum Detektieren von Leckagen eine Flüssigkeitsleitung mit einem Ventil verschließt und anschließend mittels eines Drucksensors einen Druckabfall in der Flüssigkeitsleitung misst. Bei einer Ausführungsvariante wird der Druckabfall bestimmt, indem der Druck in der Flüssigkeitsleitung vor und nach dem Schließen des Ventils gemessen und die beiden gemessenen Drücke miteinander verglichen werden. Je nach Größe des Druckabfalls wird auf eine Größe der Leckage geschlossen.

Die EP 2 940 447 A1 betrifft ein Verfahren zur Überwachung von Flüssigkeitsleitungen, bei dem nach dem Schließen einer Flüssigkeitsleitung durch ein Ventil in einer Drucktestphase ein Druckabfall in der geschlossenen Flüssigkeitsleitung gemessen wird. Hierzu kann der Druckabfall durch Berechnung einer Differenz des Drucks zu Beginn und am Ende der Drucktestphase berechnet werden. Bei Vorliegen eines Druckabfalls wird auf das Vorliegen und die Größe einer Leckage geschlossen. Während der Drucktestphase kann der Druck auch mehrfach nacheinander bestimmt werden, wobei der Druckabfall jeweils zwischen benachbarten Druckmessungen berechnet und mit einem Schwellenwert verglichen wird.

Zudem offenbart die WO 2008 142 470 A1 eine Vorrichtung zum Detektieren von Tropfleckagen, bei der eine Flüssigkeitsleitung mit einem Ventil geschlossen und mittels eines Druckschalters in der Flüssigkeitsleitung geprüft wird, ob der Druck in der geschlossenen Flüssigkeitsleitung innerhalb einer vorgegebenen Zeitspanne unter 1 bar fällt. Ist dies der Fall, wird die Prüfung viermal wiederholt. Von einer Leckage wird ausgegangen, wenn der Druck nach dem Schließen der Flüssigkeitsleitung fünfmal hintereinander innerhalb der vorgegebenen Zeitspanne unter 1 bar fällt.

Aufgabe der Erfindung ist daher, die mit Bezug auf den Stand der Technik geschilderten Probleme zumindest teilweise zu lösen und insbesondere ein Verfahren zum Detektieren einer Leckage in einer Flüssigkeitsleitung anzugeben, mit dem Tropfleckagen mit Flüssigkeitsaustritten in einem größeren Bereich detektierbar sind. Darüber hinaus soll auch ein Wasserzähler angegeben werden, mittels dem Leckagen mit Flüssigkeitsaustritten in einem größeren Bereich detektierbar sind.

Diese Aufgaben werden gelöst mit einem Verfahren und einem Wasserzähler gemäß den Merkmalen der unabhängigen Patentansprüche. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Das erfindungsgemäße Verfahren zum Detektieren einer Tropfleckage an einer Flüssigkeitsleitung weist unter anderem die folgenden Schritte auf:
a) Schließen der Flüssigkeitsleitung mit einem Ventil zum Bilden eines Druckraums in der Flüssigkeitsleitung;
b) Bestimmen eines ersten Druckabfalls in dem Druckraum;
c) Öffnen des Ventils nach Abschluss der Bestimmung des ersten Druckabfalls;
d) Schließen der Flüssigkeitsleitung mit dem Ventil zum erneuten Bilden des Druckraums in der Flüssigkeitsleitung;
e) Bestimmen eines zweiten Druckabfalls in dem Druckraum; und
f) Vergleichen des ersten Druckabfalls mit dem zweiten Druckabfall. Hinsichtlich der weiteren Merkmale des erfindungsgemäßen Verfahrens wird auf Anspruch 1 verwiesen.

Das Verfahren dient zum Detektieren einer Leckage in einer Flüssigkeitsleitung, die insbesondere zumindest teilweise in einem Gebäude von einer Flüssigkeitsquelle, wie zum Beispiel einem öffentlichen Wasserversorgungsnetz, zu zumindest einem Verbraucher, wie zum Beispiel einer Sanitärarmatur, einer Spülmaschine oder einer Waschmaschine, verläuft. Die Flüssigkeitsleitung besteht insbesondere zumindest teilweise aus Metall, wie zum Beispiel Kupfer. Die Flüssigkeitsleitung weist zudem insbesondere einen Durchmesser von 10 mm (Millimeter) bis 30 mm auf. Zum Detektieren einer Leckage beziehungsweise Tropfleckage an der Flüssigkeitsleitung wird in Schritt a) die Flüssigkeitsleitung mit einem Ventil geschlossen. Bei dem Ventil handelt es sich insbesondere um ein elektrisch betätigbares Ventil, beispielsweise nach Art eines Magnetventils. Hierdurch wird der zumindest eine Verbraucher der Flüssigkeit, bei der es sich insbesondere um Wasser handeln kann, von der Flüssigkeitsquelle getrennt und zwischen dem geschlossenen Ventil und dem (geschlossenen) zumindest einen Verbraucher ein Druckraum in der Flüssigkeitsleitung gebildet.

Anschließend wird in Schritt b) ein erster Druckabfall in dem Druckraum der Flüssigkeitsleitung bestimmt. Dies erfolgt durch eine Messung des Drucks in dem Druckraum über einen vorgegebenen Messzeitraum, wobei es sich bei dem Druckabfall um das Gefälle des Drucks in dem Messzeitraum handelt. Die Messung des Drucks erfolgt insbesondere mit einem Drucksensor, der an der Flüssigkeitsleitung und/oder in dem Druckraum der Flüssigkeitsleitung angeordnet ist.

Nach Abschluss der Bestimmung des ersten Druckabfalls wird in Schritt c) das Ventil wieder geöffnet und nach Ablauf einer vorgegebenen Zeitspanne in Schritt d) zum erneuten Bilden des Druckraums in der Flüssigkeitsleitung wieder geschlossen. Nach dem erneuten Schließen der Flüssigkeitsleitung in Schritt d) wird in Schritt e) in dem Druckraum der Flüssigkeitsleitung ein zweiter Druckabfall bestimmt. Die Bestimmung des zweiten Druckabfalls erfolgt dabei insbesondere auf gleiche Weise wie die Bestimmung des ersten Druckabfalls. Nach Abschluss der Bestimmung des zweiten Druckabfalls wird in Schritt f) der erste Druckabfall mit dem zweiten Druckabfall verglichen. Die Schritte a) bis f) werden somit insbesondere aufeinanderfolgend beziehungsweise in chronologischer Reihenfolge durchgeführt. Der Vergleich erfolgt insbesondere mit Hilfe eines Mikrocontrollers, der insbesondere datenleitend mit dem Drucksensor verbunden ist und mittels dem das Ventil betätigbar ist. Sind der erste Druckabfall und der zweite Druckabfall (im Wesentlichen) identisch, lässt dies auf eine Tropfleckage schließen. Sind demgegenüber der erste Druckabfall und der zweite Druckabfall verschieden, lässt dies auf eine gewollte Flüssigkeitsentnahme an dem zumindest einem Verbraucher schließen. Eine Tropfleckage liegt in diesem Fall nicht vor. Durch den Vergleich des ersten Druckabfalls und des zweiten Druckabfalls sind daher Tropfleckagen mit Flüssigkeitsaustritten in einem größeren Bereich, insbesondere bis 0,7 l/min, bevorzugt 0,3 l/h bis 0,7 l/min, detektierbar.

Im Falle einer Leckage kann insbesondere ein Alarmsignal ausgegeben werden, durch das ein Benutzer oder ein Bewohner des Gebäudes über die Leckage informiert wird. Das Alarmsignal kann beispielsweise per Kabelverbindung oder Funkverbindung an einen Netzwerkrouter gesendet werden, der das Alarmsignal per Internet an ein (serverbasiertes) Cloud-System weiterleitet. Das Cloud-System kann den Benutzer oder Bewohner beispielsweise per Push-Nachricht an ein Smartphone über die Leckage informieren.

Ebenfalls vorteilhaft ist es, wenn in Schritt a) oder Schritt d) die Flüssigkeitsleitung mit dem Ventil geschlossen wird, wenn keine Flüssigkeitsentnahme aus der Flüssigkeitsleitung durch zumindest einen Verbraucher erfolgt. Insbesondere wird in Schritt a) und in Schritt d) die Flüssigkeitsleitung mit dem Ventil geschlossen, wenn keine Flüssigkeitsentnahme aus der Flüssigkeitsleitung durch einen Verbraucher erfolgt. Das Vorliegen einer Flüssigkeitsentnahme durch einen Verbraucher kann insbesondere mittels eines Durchflusssensors bestimmt werden, der ebenfalls mit dem Mikrocontroller datenleitend verbunden sein kann. Wird mittels des Durchflusssensors ermittelt, dass die Durchflussmenge der Flüssigkeit durch die Flüssigkeitsleitung (im Wesentlichen) 0 l/min beträgt, erfolgt keine Flüssigkeitsentnahme aus der Flüssigkeitsleitung durch den zumindest einen Verbraucher.

Weiterhin ist es vorteilhaft, wenn in Schritt a) oder Schritt d) die Flüssigkeitsleitung für drei Sekunden geschlossen wird. Insbesondere wird in Schritt a) und in Schritt d) die Flüssigkeitsleitung für 3 Sekunden geschlossen. Dies bedeutet insbesondere, dass auch die Bestimmung des ersten Druckabfalls in Schritt b) und/oder die Bestimmung des zweiten Druckabfalls in Schritt e) über eine Messdauer von drei Sekunden erfolgt.

Vorzugsweise wird das Verfahren abgebrochen, wenn in Schritt b) kein erster Druckabfall feststellbar ist. Dies bedeutet insbesondere, dass nach dem Schließen der Flüssigkeitsleitung mit dem Ventil in Schritt a) der Druck in dem Druckraum konstant bleibt. Daraus kann geschlossen werden, dass weder eine Flüssigkeitsentnahme durch zumindest einen Verbraucher noch eine Leckage vorliegt.

Ferner ist es vorteilhaft, wenn in Schritt c) das Ventil für mindestens eine Minute geöffnet wird. Dies bedeutet insbesondere, dass auch die Bestimmung des ersten Druckabfalls in dem Druckraum in Schritt b) und die Bestimmung des zweiten Druckabfalls in dem Druckraum in Schritt e) mit einem zeitlichen Abstand von mindestens einer Minute erfolgt.

Zudem ist es vorteilhaft, wenn nach Schritt e) die Schritte c) bis e) zur Bestimmung zumindest eines weiteren Druckabfalls in dem Druckraum zumindest einmal wiederholt werden und wobei in Schritt f) der erste Druckabfall, der zweite Druckabfall und der zumindest eine weitere Druckabfall miteinander verglichen werden. Durch die größere Anzahl an gemessenen Druckabfällen und deren Vergleich können Leckagen mit einer größeren Zuverlässigkeit von Flüssigkeitsentnahmen durch den zumindest einen Verbraucher detektiert werden.

Weiterhin ist es vorteilhaft, wenn die Bestimmung des ersten Druckabfalls, des zweiten Druckabfalls und des zumindest einen weiteren Druckabfalls mit unterschiedlichen zeitlichen Abständen erfolgt. Die unterschiedlichen zeitlichen Abstände können zufällig bestimmt werden, beispielsweise nach 4 Minuten, 41 Minuten, 43 Minuten.

Einem weiterem Aspekt der Erfindung folgend wird auch ein Wasserzähler mit einem Ventil, einem Durchflusssensor und einem Drucksensor, die datenleitend mit einer Steuerung verbunden sind, angegeben, wobei die Steuerung zur Durchführung des erfindungsgemäßen Verfahrens eingerichtet ist.

Mittels des Wasserzählers ist insbesondere ein Wasserverbrauch in einer logischen Einheit, wie zum Beispiel einem Gebäude, einer Wohnung oder einem Hotelraum bestimmbar, sodass eine Flüssigkeit, insbesondere Wasser, verbrauchsabhängig abrechenbar ist. Der Wasserzähler ist insbesondere in einer Flüssigkeitsleitung angeordnet, über die die Flüssigkeit von einer Flüssigkeitsquelle zu zumindest einem Verbraucher führbar ist. Ferner weist der Wasserzähler ein Ventil, mit dem die Flüssigkeitsleitung verschließbar ist, einen Durchflusssensor, mit dem ein Flüssigkeitsdurchfluss durch die Flüssigkeitsleitung bestimmbar ist, und einen Drucksensor, mit dem ein Druck beziehungsweise Druckverlauf in der Flüssigkeitsleitung bestimmbar ist, auf, die datenleitend (per Kabelverbindung und/oder Funkverbindung) mit einer Steuerung verbunden sind. Bei der Steuerung handelt es sich insbesondere um einen Mikrocontroller. Die Steuerung ist zur Durchführung des erfindungsgemäßen Verfahrens eingerichtet und vorgesehen. Für weitere Einzelheiten wird auf die Beschreibung des erfindungsgemäßen Verfahrens verwiesen.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, diese jedoch nicht darauf beschränkt ist. Es zeigt beispielhaft und schematisch:

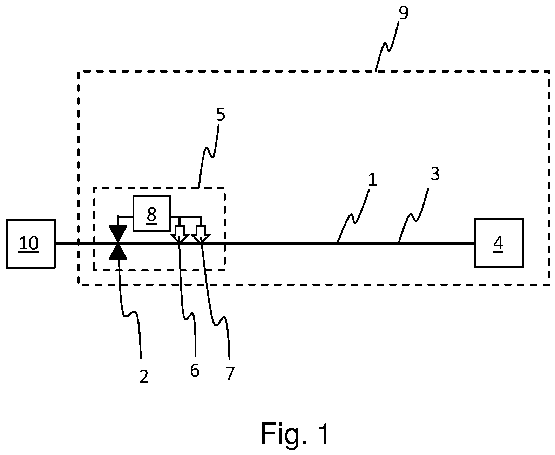

Fig. 1: ein Gebäude mit einem Wasserzähler.

Die Fig. 1 zeigt schematisch ein Gebäude 9 mit einem Wasserzähler 5. Der Wasserzähler 5 ist in einer Flüssigkeitsleitung 1 angeordnet, mittels der Flüssigkeit von einer Flüssigkeitsquelle 10 zu einem Verbraucher 4 führbar ist. Der Wasserzähler 5 weist ein Ventil 2 nach Art eines Magnetventils auf, mittels dem die Flüssigkeitsleitung 1 zum Bilden eines Druckraums 3 in der Flüssigkeitsleitung 1 schließbar ist. Der Druckraum 3 erstreckt sich dabei von dem Ventil 2 bis zu dem Verbraucher 4. Weiterhin weist der Wasserzähler 5 einen Drucksensor 7 auf, mittels dem ein Druck und somit ein Druckabfall in dem Druckraum 3 nach dem Schließen der Flüssigkeitsleitung 1 mit dem Ventil 2 bestimmbar ist. Das Schließen der Flüssigkeitsleitung 1 mit dem Ventil 2 erfolgt, wenn durch einen Durchflusssensor 6 des Wasserzählers 5 ermittelt wurde, dass keine Flüssigkeitsentnahme über die Flüssigkeitsleitung 1 aus der Flüssigkeitsquelle 10 durch den Verbraucher 4 erfolgt. Das Ventil 2, der Durchflusssensor 6 und der Drucksensor 7 sind datenleitend mit einer Steuerung 8 des Wasserzählers 5 drahtlos oder per Funkverbindung verbunden. Die Steuerung 8 ist zur Durchführung des erfindungsgemäßen Verfahrens eingerichtet und vorgesehen.

Mit der vorliegenden Erfindung sind Tropfleckagen mit Flüssigkeitsaustritten in einem größeren Bereich, insbesondere bis 0,7 l/min, bevorzugt 0,3 l/h bis 0,7 l/min, detektierbar.

### Bezugszeichenliste

- 1: Flüssigkeitsleitung
- 2: Ventil
- 3: Druckraum
- 4: Verbraucher
- 5: Wasserzähler
- 6: Durchflusssensor
- 7: Drucksensor
- 8: Steuerung
- 9: Gebäude
- 10: Flüssigkeitsquelle

## Patentansprüche

1. Verfahren zum Detektieren einer Tropfleckage an einer Flüssigkeitsleitung (1), aufweisend zumindest die folgenden Schritte:
a) Schließen der Flüssigkeitsleitung (1) mit einem Ventil (2) zum Bilden eines Druckraums (3) in der Flüssigkeitsleitung (1);
b) Bestimmen eines ersten Druckabfalls in dem Druckraum (3);
c) Öffnen des Ventils (2) nach Abschluss der Bestimmung des ersten Druckabfalls;
d) Schließen der Flüssigkeitsleitung (1) mit dem Ventil (2) zum erneuten Bilden des Druckraums (3) in der Flüssigkeitsleitung (1);
e) Bestimmen eines zweiten Druckabfalls in dem Druckraum (3); **gekennzeichnet durch**
f) Vergleichen des ersten Druckabfalls mit dem zweiten Druckabfall; Detektieren der Tropfleckage, wenn der erste Druckabfall und der zweite Druckabfall im Wesentlichen identisch sind; und Schließen auf eine gewollte Flüssigkeitsentnahme aus der Flüssigkeitsleitung (1) durch zumindest einen Verbraucher (4), wenn der erste Druckabfall und der zweite Druckabfall verschieden sind.

2. Verfahren nach Patentanspruch 1, wobei in Schritt a) oder Schritt d) die Flüssigkeitsleitung (1) mit dem Ventil (2) geschlossen wird, wenn keine Flüssigkeitsentnahme aus der Flüssigkeitsleitung (1) durch den zumindest einen Verbraucher (4) erfolgt.

3. Verfahren nach einem der vorhergehenden Patentansprüche, wobei in Schritt a) oder Schritt d) die Flüssigkeitsleitung (1) für drei Sekunden geschlossen wird.

4. Verfahren nach einem der vorhergehenden Patentansprüche, wobei das Verfahren abgebrochen wird, wenn in Schritt b) kein erster Druckabfall feststellbar ist.

5. Verfahren nach einem der vorhergehenden Patentansprüche, wobei in Schritt c) das Ventil (2) für mindestens eine Minute geöffnet wird.

6. Verfahren nach einem der vorhergehenden Patentansprüche, wobei nach Schritt e) die Schritte c) bis e) zur Bestimmung zumindest eines weiteren Druckabfalls in dem Druckraum (3) zumindest einmal wiederholt werden und wobei in Schritt f) der erste Druckabfall, der zweite Druckabfall und der zumindest eine weitere Druckabfall miteinander verglichen werden.

7. Verfahren nach Patentanspruch 6, wobei die Bestimmung des ersten Druckabfalls, des zweiten Druckabfalls und des zumindest einen weiteren Druckabfalls mit unterschiedlichen zeitlichen Abständen erfolgt.

8. Wasserzähler (5), aufweisend ein Ventil (2), einen Durchflusssensor (6) und einen Drucksensor (7), die datenleitend mit einer Steuerung (8) verbunden sind, wobei die Steuerung (8) zur Durchführung des Verfahrens nach einem der vorhergehenden Patentansprüche eingerichtet ist.

## Claims

1. A method for detecting a leakage in a liquid channel (1), having at least the following steps:
a) Closing the liquid channel (1) with a valve (2) to form a pressurized space (3) in the liquid channel (1);
b) Determining a first pressure drop in the pressurized space (3);
c) Opening the valve (2) after conclusion of the determination of the first pressure drop;
d) Closing the liquid channel (1) with the valve (2) to re-form the pressurized space (3) in the liquid channel (1);
e) Determining a second pressure drop in the pressurized space (3);
**characterized by**
f) Comparing the first pressure drop to the second pressure drop; detecting the leakage if the first pressure drop and the second pressure drop are essentially identical; and inferring a desired removal of liquid from the liquid channel (1) by at least one consumer (4) if the first pressure drop and the second pressure drop are different.

2. The method according to Claim 1, wherein the liquid channel (1) is closed with the valve (2) in step a) or step d) in the event that a removal of liquid from the liquid channel (1) by the at least one consumer (4) does not take place.

3. The method according to any one of the preceding claims, wherein the liquid channel (1) is closed for three seconds in step a) or step d).

4. The method according to any one of the preceding claims, wherein the method is aborted if a first pressure drop cannot be detected in step b).

5. The method according to any one of the preceding claims, wherein the valve (2) is opened for at least one minute in step c).

6. The method according to any one of the preceding claims, wherein after step e), steps c) through e) are repeated at least once for determining at least one further pressure drop in the pressurized space (3) and wherein the first pressure drop, the second pressure drop and the at least one further pressure drop are compared to one another in step f).

7. The method according to claim 6, wherein the determination of the first pressure drop, of the second pressure drop and of the at least one further pressure drop takes place at different time intervals.

8. A water meter (5) having a valve (2), a flow sensor (6) and a pressure sensor (7), which are connected to a controller (8) such that data are carried, wherein the controller (8) is designed for carrying out the method according to any one of the preceding claims.

## Revendications

1. Procédé, destiné à détecter une fuite de gouttes sur un conduit de liquide (1), comportant au moins les étapes suivantes, consistant à :
a) fermer le conduit de liquide (1) à l'aide d'une soupape (2), pour créer un espace pressurisé (3) dans le conduit de liquide (1) ;
b) déterminer une première chute de pression dans l'espace pressurisé (3) ;
c) ouvrir la soupape (2) après achèvement de la détermination de la première chute de pression ;
d) fermer le conduit de liquide (1) à l'aide de la soupape (2), pour recréer l'espace pressurisé (3) dans le conduit de liquide (1) ;
e) déterminer une deuxième chute de pression dans l'espace pressurisé (3) ;
**caractérisé par**
f) la comparaison de la première chute de pression avec la deuxième chute de pression ; la détection de la fuite de gouttes, si la première chute de pression et la deuxième chute de pression sont sensiblement identiques ; et la fermeture pour atteindre un soutirage de liquide voulu à partir du conduit de liquide (1) par au moins un consommateur (4), si la première chute de pression et la deuxième chute de pression sont différentes.

2. Procédé selon la revendication 1, dans l'étape a) ou dans l'étape d), le conduit de liquide (1) étant fermé à l'aide de la soupape (2) s'il ne s'effectue aucun prélèvement de liquide à partir du conduit de liquide (1) par au moins un consommateur (4).

3. Procédé selon l'une quelconque des revendications précédentes, dans l'étape a) ou dans l'étape d), le conduit de liquide (1) étant fermé pendant trois secondes.

4. Procédé selon l'une quelconque des revendications précédentes, le procédé étant interrompu si dans l'étape b) aucune première chute de pression n'est constatable.

5. Procédé selon l'une quelconque des revendications précédentes, dans l'étape c), la soupape (2) étant ouverte pendant au moins une minute.

6. Procédé selon l'une quelconque des revendications précédentes, après l'étape e), les étapes c) à e) étant répétées au moins une fois, pour déterminer au moins une chute de pression supplémentaire dans l'espace pressurisé (3) et dans l'étape f), la première chute de pression, la deuxième chute de pression et l'au moins une chute de pression supplémentaire étant comparées les unes avec les autres.

7. Procédé selon la revendication 6, la détermination de la première chute de pression, de la deuxième chute de pression et de l'au moins une chute de pression supplémentaire s'effectuant à différents intervalles temporels.

8. Compteur d'eau (5), comportant une soupape (2), un débitmètre (6) et un capteur de pression (7), qui sont connectés en liaison de communication de données avec un système de commande (8), le système de commande (8) étant aménagé pour réaliser le procédé selon l'une quelconque des revendications précédentes.
